# EUROPÄISCHE PATENTSCHRIFT

(11) **EP 2 304 268 B1**
(45) Veröffentlichungstag und Bekanntmachung des Hinweises auf die Patenterteilung: **02.12.2015**
(21) Anmeldenummer: 09776133.2
(22) Anmeldetag: 15.07.2009
(51) Int. Cl.: F16F 13/14

(54) **HYDRAULISCH DÄMPFENDES BUCHSENLAGER**
HYDRAULICALLY DAMPING BUSHING BEARING
PALIER À DOUILLE À AMORTISSEMENT HYDRAULIQUE

(30) Priorität: 18.07.2008 DE 102008040548
(43) Veröffentlichungstag der Anmeldung: 06.04.2011
(73) Patentinhaber: BOGE Elastmetall GmbH, 49401 Damme (DE)
(72) Erfinder: ESCHWEILER, Josef, 53343 Wartberg (DE); GROSS, Josef Peter, 53489 Sinzig-Westum (DE)
(74) Vertreter: Bossmeyer, Jörg Peter
(86) Internationale Anmeldenummer: PCT/DE2009/050038
(87) Internationale Veröffentlichungsnummer: WO 2010/006597

(56) Entgegenhaltungen:
- EP-A- 0 199 240
- WO-A-2005/059399
- DE-A1- 4 020 713
- US-A- 5 286 011
- US-A1- 2007 045 918

## Beschreibung

Die Erfindung betrifft ein elastomeres Buchsenlager mit einer hydraulischen Dämpfung. Sie bezieht sich insbesondere auf ein Buchsenlager, dessen spezielle Ausbildung es unter anderem ermöglicht, thermisch sehr robuste Buchsenlager zu realisieren.

Elastomere Buchsenlager, wie sie insbesondere im Fahrzeugbau in großer Zahl eingesetzt werden, bestehen im Wesentlichen aus einem metallischen, zumeist rotationssymmetrischen beziehungsweise häufig zylinderförmig ausgebildeten Lagerkern, einer den Lagerkern umgebenden, in der Regel ebenfalls aus Metall bestehenden Außenhülse und einem zwischen dem Lagerkern und der Außenhülse angeordneten elastomeren Lagerkörper, welcher ein elastomere Tragfeder ausbildet. Der elastomere Lagerkörper ist im Allgemeinen zumindest mit dem Lagerkern, gegebenenfalls aber auch mit der Außenhülse durch Vulkanisation verbunden. Je nach dem Einsatzzweck wird die Dämpfungswirkung der Buchsenlager durch ein in das Lager integriertes, radial wirkendes hydraulisches Dämpfungssystem unterstützt. Hierzu sind dann in dem Buchsenlager beziehungsweise dessen Lagerkörper zumindest zwei Kammern zur Aufnahme eines fluiden Dämpfungsmittels ausgebildet, welche durch einen Dämpfungsmittelkanal strömungsleitend miteinander verbunden sind. Im Falle eines Lasteintrags in das Lager mit einer in radialer Richtung auf eine der Kammern wirkenden Kraft wird dabei das in dieser Kammer enthaltene fluide Dämpfungsmittel aus dieser Kammer über den Dämpfungsmittelkanal in die jeweils andere Kammer verdrängt.

Je nach Ausgestaltung des vorgenannten Kanals beziehungsweise der Kanalgeometrie wird das Dämpfungsverhalten des Lagers durch eine von dem hydraulischen Dämpfungssystem hervorgerufene Masse- oder Drosseldämpfung unterstützt. Der die Kammern miteinander verbindende Kanal wird entweder unmittelbar in dem elastomeren Lagerkörper oder in einem innerhalb des Lagerkörpers angeordneten oder ihn umgebenden, gesonderten Kanalträgerelement ausgebildet. Ein gattungsgemäßes Lager wird beispielsweise durch die DE 40 20 713 C2 offenbart.

In der Regel werden die Lager zudem zur Begrenzung des über die Kammern gegebenen Federweges ihres Tragkörpers mit einem an dem Lager ausgebildeten oder an ihm angeordneten Anschlagelement ausgestattet. Dabei besteht insbesondere bei Lagern mit einem radial wirkenden hydraulischen Dämpfungssystem häufig das Problem, dass zur Ausbildung entsprechender Anschlagelemente beziehungsweise Anschlagflächen aufgrund der sich im Lager erstreckenden Kammern und des Dämpfungsmittelkanals nur wenig Platz zur Verfügung steht. Daher werden die Anschlagelemente in manchen Fällen als Teil zusätzlicher, an den axialen Stirnseiten des Buchsenlagers aufgedrückter Clipse, vorzugsweise aus Kunststoff, realisiert.

Zur Verbindung mit den anderen Bauteilen am Einbauort werden die Buchsenlager in ein an einem dieser Bauteile ausgebildetes Aufnahmeauge eingepresst und im allgemeinen durch eine Verschraubung mit dem Innenteil zusätzlich fixiert. Sofern die Anschlagelemente durch an den axialen Enden aufgedrückte Clipse realisiert sind, ist es dabei erforderlich, das entsprechende Aufnahmeauge so auszubilden, dass das Lager auf seiner gesamten axialen Länge von diesem umfasst wird. Dies bedingt beispielsweise im Falle eines Lenkerlagers für ein Kraftfahrzeug, dass der das Lager mit seinem entsprechenden Aufnahmeauge aufnehmende Lenker verhältnismäßig breit ausgebildet werden muss. Zudem ergibt sich durch die trotzdem vergleichsweise kleinen Anschlagelemente beziehungsweise Anschlagflächen in den Clipsen das Problem, dass radial dämpfende Buchsenlager nur in beschränktem Maße durch kardanisch wirkende Kräfte belastbar sind. Insoweit ist es das Bestreben, die Lagergeometrie so auszubilden, dass möglichst große Anschlagflächen realisiert werden können.

Entsprechendes wird beispielsweise durch ein gemäß der EP 01 99 240 A2 ausgebildetes Lager erreicht. Bei dem in der Schrift dargestellten Lager sind die Dämpfungsmittelkammern an den axialen Lagerenden ausgebildet, so dass in der Lagermitte viel Platz zur Ausbildung von Anschlagelementen zur Verfügung steht. Zur Realisierung der Kammern sind auf einem Lagerhauptteil an den axialen Enden Kappen aufgesetzt, welche aus einem äußeren und einem inneren Ring aus starrem Material und einem dazwischen angeordneten elastomeren Ring bestehen. Die bezogen auf die Umfangsrichtung des Lagers gegeneinander versetzt angeordneten Kammern sind durch einen sich zwischen dem Elastomer der Kappen und dem Elastomer des Lagerkörpers des Lagerhauptteils erstreckenden Dämpfungsmittelkanal miteinander verbunden. Aufgrund des Verzichts auf ein Kanalträgerelement und der Realisierung der Kanalwände mit dem Elastomer des Lagerkörpers beziehungsweise der Kappen bringt jedoch die vorgeschlagene Lösung das Problem mit sich, dass die Geometrie des Dämpfungsmittelkanals nicht klar definiert ist. Sie verändert sich vielmehr jeweils in Abhängigkeit der eingetragenen Last und der daraus resultierenden Verformungen des den Kanal umschließenden Elastomers. Dies ist insbesondere im Hinblick auf kardanische Belastungen des Lagers von Nachteil, da dessen Dämpfungsverhalten bei großen kardanischen Belastungen aufgrund der damit einhergehenden Veränderungen der Kanalgeometrie kaum noch vorherzusagen ist.

Zudem hat es sich gezeigt, dass bekannte elastomere Buchsenlager nur sehr eingeschränkt thermisch belastbar sind. Bei einem Einsatz in Kraftfahrzeugen führt dies dazu, dass bei einer Verwendung der Kraftfahrzeuge in Regionen mit einem sehr heißen Klima ein erhöhter Verschleiß an den Lagern auftritt. Durch die hohen Temperaturen wird dabei das Elastomer des Lagerkörpers häufig brüchig. Sofern es sich bei den Lagern um Lager mit einer hydraulischen Dämpfung handelt, führt dies zudem in der Folge zu Undichtigkeiten im Bereich Lagern, wodurch das Lager im ungünstigen Fall insoweit gänzlich ausfällt, als dass seine vorgesehene Dämpfungswirkung nicht mehr gegeben ist.

Aufgabe der Erfindung ist es daher, ein elastomeres Buchsenlager mit hydraulischer Dämpfung bereitzustellen, welches die vorgenannten Probleme vermeidet. Das dazu anzugebende Buchsenlager soll insbesondere auch für hohe kardanische Belastungen ausgebildet sein und hierzu großflächige Anschlagelemente besitzen. Ferner soll auch bei starken mechanischen und/oder thermischen Belastungen des Lagers die Dichtheit des hydraulischen Dämpfungssystems gewährleistet sein, wobei auf der Grundlage des Lösungskonzepts vorzugsweise auch die Realisierung besonders temperaturrobuster Lager möglich sein soll.

Die Aufgabe wird durch ein elastomeres Buchsenlager mit den Merkmalen des Hauptanspruchs gelöst. Vorteilhafte Aus- beziehungsweise Weiterbildungen der Erfindung sind durch die Unteransprüche gegeben.

Das zur Lösung der Aufgabe vorgeschlagene hydraulisch dämpfende Buchsenlager besteht, wie grundsätzlich bekannt, aus einer Außenhülse und einem von der Außenhülse aufgenommenen inneren Lagerteil mit einem starren, hülsen- oder strangförmigen metallischen Lagerkern, einem den Lagerkern umgebenden und mit ihm durch Vulkanisation verbundenen elastomeren Lagerkörper sowie mit mindestens zwei Kammern zur Aufnahme eines fluiden Dämpfungsmittels. Die vorgenannten Kammern weisen jeweils mindestens eine elastomere Blähwand auf. Sie sind in der Umfangsrichtung des Lagers zueinander versetzt angeordnet und durch Stege des Lagerkörpers voneinander getrennt, aber durch wenigstens einen Kanal miteinander verbunden, über welchen Dämpfungsmittel von einer Kammer in die andere übertreten kann. Je nach dem vorgesehenen Einsatzzweck des Lagers ist der die Kammern miteinander verbindende Kanal durch eine entsprechende, insbesondere die Kanallänge betreffende Geometrie entweder als Massedämpfungskanal oder als Drosselkanal ausgebildet. In den Kammern sind vorzugsweise durch das Elastomer des Lagerkörpers ausgebildete Radialanschläge angeordnet.

Ferner ist bei dem zur Lösung der Aufgabe vorgeschlagenen Lager der innere Lagerteil bezüglich der Längsachse des Lagers segmentiert ausgebildet. Dabei sind die schon angesprochenen Blähwände der Kammern liegend, das heißt quer zur Lagerachse, angeordnet. Sie sind dazu als Teil zweier, an jeweils einer axialen Stirnseite eines mittleren Hauptsegments des inneren Lagerteils angeordneter Stirnsegmente ausgebildet, welche mittels des Lagerkerns und der Außenhülse an dem mittleren Hauptsegment des inneren Lagerteils gehalten sind. Die Stirnsegmente bestehen jeweils aus einem starren Innenring, einem starren Außenring und einem zwischen dem Innenring und dem Außenring angeordneten elastomeren Element. Sie sind erfindungsgemäß mit ihrem Innenring derart in einer Presspassung auf die axialen Enden des in dem mittleren Hauptsegment angeordneten Lagerkerns aufgepresst, dass zwischen den elastomeren Elementen der Stirnsegmente und den Stegen des Lagerkörpers eine Materialüberdeckung in axialer Richtung des Buchsenlagers gegeben ist. Die Stege des Lagerkörpers und die elastomeren Elemente der Stirnsegmente sind dabei gegeneinander verspannt bzw. stehen unter Vorspannung. Erfindungsgemäß sind dabei durch diese Materialüberdeckung die Kammern im Bereich der Stege gegen den Lagerkörper und damit gegeneinander abgedichtet. Aufgrund der Abdichtung der Kammern gegen die Stege des Lagerkörpers ist der die Kammern miteinander verbindende Kanal nach außen verlegt. Er ist in einem zwischen dem Lagerkörper und der Außenhülse angeordneten und mit dem Lagerkörper durch Vulkanisation verbundenen starren Kanalträgerelement ausgebildet. Das vorgenannte Kanalträgerelement ist gemäß einer bevorzugten Ausführungsform der Erfindung aus Kunststoff ausgebildet. Einerseits durch die Presspassung ihres Innenrings mit dem Lagerkern und andererseits durch eine stirnseitige Einengung der Außenhülse des Lagers werden die Stirnsegmente an dem mittleren Segment gehalten, das heißt in axialer Richtung gegenüber dem Hauptsegment lagefixiert.

Gemäß einer besonders bevorzugten Ausführungsform des erfindungsgemäßen Buchsenlagers besteht der zwischen dem starren Innenring und dem starren Außenring angeordnete elastische Teil der Stirnsegmente aus einem Elastomer, welches temperaturbeständiger ist als die übrigen am mittleren Hauptsegment angeordneten Teile des elastomeren Lagerkörpers. Hierdurch ist es möglich, thermisch sehr robuste Buchsenlager zu realisieren, ohne dass sich hieraus Einschränkungen für den Dämpfungskomfort der Lager und deren Dauerlaufbeständigkeit ergeben. Dies wäre mit einer Ausführung des gesamten Lagerkörpers aus einem hoch temperaturbeständigen Elastomer nicht möglich, da es sich gezeigt hat, dass besonders temperaturbeständige Elastomere im Hinblick auf mechanische Belastungen Nachteile bei den Dauerlaufeigenschaften aufweisen. Sofern die Lager jedoch hohen Temperaturen ausgesetzt sind, unterliegen aber andererseits ihre elastomeren Komponenten auch aufgrund der thermischen Belastung einem höheren Verschleiß, welcher insbesondere im Bereich der mechanisch stark beanspruchten Blähwände der Kammern zu einem vorzeitigen Ausfall führen kann. Hierbei hat es sich gezeigt, dass das Elastomer bei hohen Temperaturen dazu neigt, brüchig zu werden und schließlich zu zerkrümeln, so dass im Bereich der Blähwände Undichtigkeiten auftreten. Durch den segmentierten Aufbau des inneren Lagerteils des erfindungsgemäßen Buchsenlagers ist es jedoch bei Verwendung eines temperaturrobusteren Elastomers für die Stirnsegmente möglich, den bei hohen Temperaturen im Bereich der Blähwände auftretenden Belastungen gerecht zu werden und gleichzeitig dem im Hinblick auf mechanische Beanspruchungen schlechteren Dauerlaufverhalten temperaturrobusterer Elastomere Rechnung zu tragen. Im Hinblick auf eine temperaturrobustere Ausbildung der Blähwände kommt für die elastomeren Elemente der Stirnsegmente unter anderem eine SilikonGummi-Mischung in Betracht. Darüber hinaus ist für diese elastomeren Elemente mit besonderem Vorteil die Verwendung einer Ethylen-Propylen-Dien-Monomer-Gummimischung (EPDM) möglich.

Das Kanalträgerelement des erfindungsgemäßen Buchsenlagers besteht entsprechend einer besonders bevorzugten Ausbildungsform aus einem Kunststoff. Dabei ist die Verwendung von Kunststoff für den Kanalträger dadurch möglich, dass dieser außen zwischen dem Lagerkörper und der Außenhülse auf den Lagerkörper aufgeschoben ist. Dadurch treten Probleme, wie sie im Zusammenhang mit der Vulkanisation bei aus Kunststoff bestehenden, in den Lagerkörper einvulkanisierten und daher während des Vulkanisationsvorgangs innerhalb der Form frei in dem mit Elastomer für den Lagerkörper auszufüllenden Bereich gehaltenen Kanalträgerelementen bekannt sind, nicht auf. Darüber hinaus können Kanalträgerelemente aus Kunststoff deutlich preiswerter gefertigt werden, als die bekannten, im Falle einer Einvulkanisierung in den Lagerkörper verwendeten so genannten Aluminium-Kanalkäfige. Zudem ergibt sich durch die Verwendung von Kunststoff in vorteilhafter Weise eine Gewichtsreduzierung. Auch das Tuning des Lagers gestaltet sich insbesondere im Hinblick auf das gezielte Vorspannen des elastomeren Lagerkörpers durch die Verwendung des außenliegenden Kanalträgerelements aus Kunststoff einfacher. Ein gesonderter Kalibrierungsprozess durch Reduzierung des Durchmessers der Außenhülse kann dabei zur Erzeugung der Vorspannung in dem elastomeren Lagerkörper insoweit entfallen, als eine Vorspannung des Elastomers aufgrund der Nachgiebigkeit des Kunststoffs bereits durch das Einpressen des von dem Kanalträgerelement umgebenen und mit ihm durch Vulkanisation verbundenen inneren Lagerkörpers in die Außenhülse erreicht wird. Durch die Verlegung des Kanals aus dem Inneren des Lagerkörpers in ein zwischen dem Lagerkörper und der Außenhülse angeordnetes Kanalträgerelement sind ferner im Hinblick auf den zur Verfügung stehenden Platz mehr Möglichkeiten für die geometrische Gestaltung des Kanals gegeben. Besonders vorteilhaft lassen sich daher Massedämpfungskanäle mit großer Kanallänge realisieren. So erstreckt sich der Kanal gemäß einer vorgesehenen Ausbildungsform der Erfindung über die gesamte axiale Länge des Kanalträgerelements. Er mündet hierbei jeweils an einer Stirnseite des Kanalträgerelements im Bereich des Übergangs zwischen dem Hauptsegment und dem jeweiligen Stirnsegment des inneren Lagerteils in die zugehörige Kammer ein.

Bei einer bezüglich der Gestaltung des Lagerkerns vorgesehenen Ausbildungsform des erfindungsgemäßen Buchsenlagers besteht der Lagerkern aus einer hohlzylindrischen Innenhülse aus Metall und einem auf diese Innenhülse aufgepressten äußeren Lagerkern aus Kunststoff. Dabei ragt die metallische Innenhülse axial beidseitig aus dem äußeren, aus Kunststoff bestehenden Lagerkern heraus. Die Stirnsegmente des inneren Lagerteils sind bei dieser Ausbildungsform des Buchsenlagers auf die herausragenden Enden der Innenhülse aufgepresst.

Da die Radialanschläge, anders als bei anderen Lagern des Standes der Technik bekannt, nicht an den axialen Enden des Lagers mittels entsprechender Clipse realisiert sind, sondern sich im Inneren des Lagers befinden und hier in den Kammern angeordnet sind, ist für deren Ausbildung ebenfalls erheblich mehr Raum gegeben. Gemäß einer bevorzugten Ausbildungsform erstrecken sich daher die Radialanschläge, welche aus dem Elastomer des Lagerkörpers gebildet sind, innerhalb der Kammern auf der Außenseite des zuvor angesprochenen äußeren, aus Kunststoff bestehenden Lagerkerns über dessen gesamte axiale Länge. Das solchermaßen ausgebildete Buchsenlager kann in vorteilhafter Weise hohe kardanische Belastungen beziehungsweise große kardanische Winkel aufnehmen.

Durch die segmentierte Ausbildung des inneren Lagerteils ist bei dem erfindungsgemäßen Lager eine Funktionstrennung derart gegeben, dass statische Lasten durch das Elastomer des mittleren Hauptsegments und insbesondere durch dessen Stege aufgenommen werden, während die hydraulische Funktion durch die Blähwände der separaten Stirnsegmente erfüllt wird. Dabei können die Stege des mittleren Hauptsegments durch die Verlagerung des Kanals in den äußeren Lagerbereich beziehungsweise in das außerhalb des Lagerkörpers angeordnete Kanalträgerelement in vorteilhafter Weise sehr breit und damit bezüglich der von ihnen aufgenommenen statischen Lasten sehr dauerhaltbar ausgeführt werden, während gleichzeitig die Materialstärke der Blähwände und ihre Wölbungen aufgrund ihrer Ausbildung in den Stirnsegmenten in einem weiten Bereich variierbar sind. Hierbei kann durch eine dünne Ausbildung der Blähwände aufgrund ihrer dadurch gegebenen besseren Nachgiebigkeit ein besseres dynamisches Verhalten des Lagers beziehungsweise ein besseres Verhalten von C_{statisch} zu C_{dynamisch} erreicht werden.

Die Erfindung soll nachfolgend nochmals anhand eines Ausführungsbeispiels näher erläutert werden. In den zugehörigen Zeichnungen zeigen:
- Fig. 1:: eine mögliche Ausbildungsform des erfindungsgemäßen Buchsenlagers in einer räumlichen Ansicht in Explosionsdarstellung,
- Fig. 2:: das Lager gemäß Fig. 1 im zusammengefügten Zustand in einem axialen Schnitt,
- Fig. 3:: das Lager gemäß Fig. 2 in einem radialen Schnitt,
- Fig. 4a: ein Lager in einer Ausbildung entsprechend Fig. 1 bis Fig. 3 in einer Schnittdarstellung mit einem axial durch die Stege geführten Schnitt,
- Fig. 4b:: einen vergrößerten Ausschnitt einer Einzelheit des Lagers gemäß der Fig. 4a.

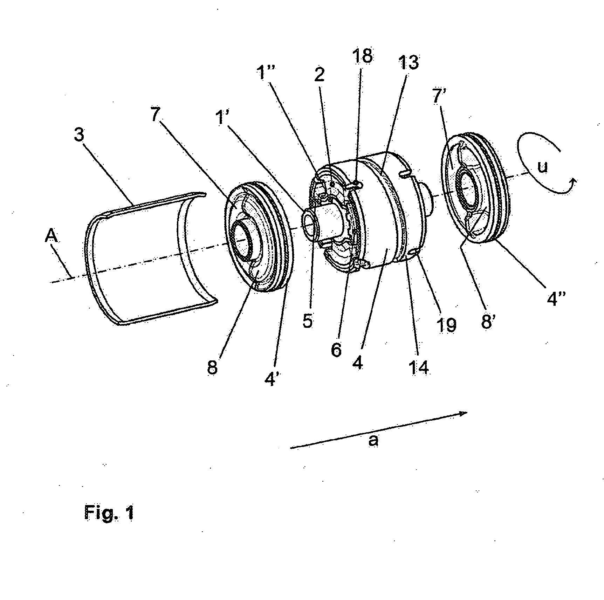

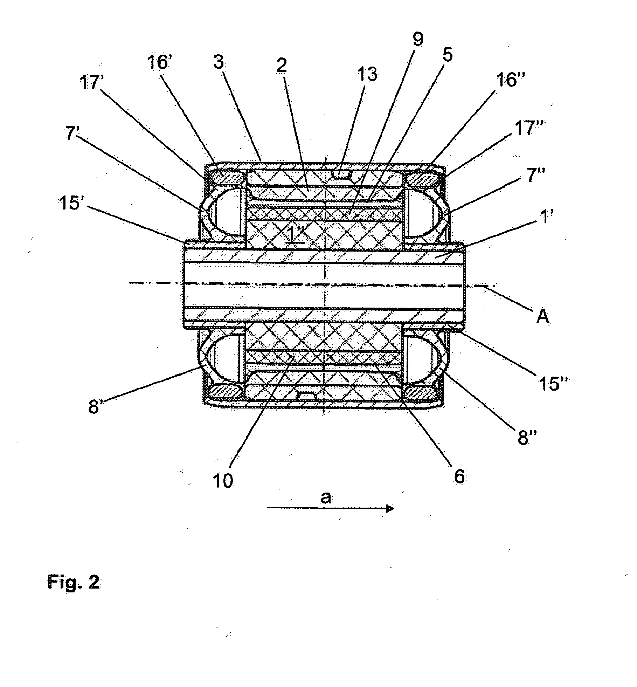

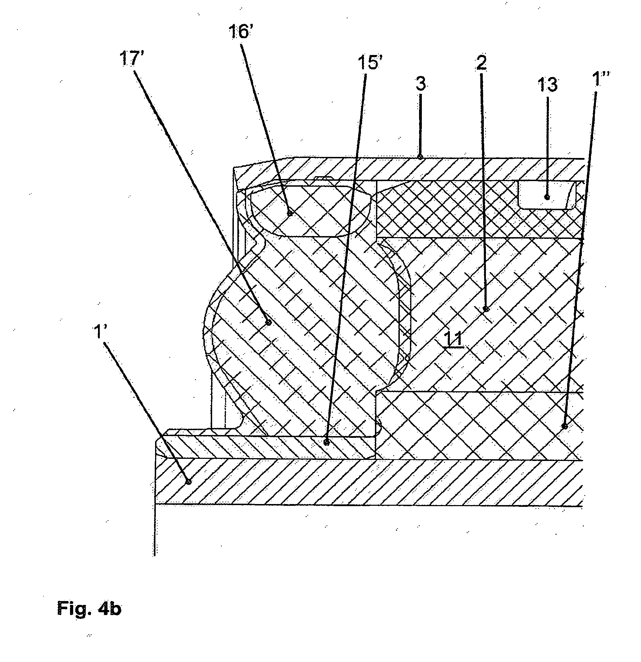

Die Fig. 1 zeigt eine mögliche Ausbildungsform des erfindungsgemäßen Lagers in einer räumlichen Ansicht. Das Lager ist in der Figur in einer Explosionsdarstellung gezeigt. Es besteht aus einem inneren Lagerteil 4, 4', 4" und einer diesen inneren Lagerteil 4, 4', 4" aufnehmenden Außenhülse 3, welche in der Darstellung mit einem ausgeschnittenen Umfangssegment gezeigt ist. Der innere Lagerteil 4, 4', 4" ist bezogen auf die Längsachse A des Lagers segmentiert ausgebildet. Er besteht aus dem mittleren Hauptsegment 4 mit dem Lagerkern 1', 1" und dem mit dem Lagerkern 1', 1" durch Vulkanisation verbundenen elastomeren Lagerkörper 2, in welchem die Kammern 5, 6 für das Dämpfungsmittel ausgebildet sind. Die Kammern werden axial außen durch die beiden Stirnsegmente 4', 4" mit den daran ausgebildeten Blähwänden 7', 7", 8', 8" begrenzt. Diese Stirnsegmente 4, 4" bestehen (siehe dazu Fig. 2) aus einem starren Innenring 15', 15'', einem starren Außenring 16', 16" und einem zwischen dem Innenring 15', 15" und dem Außenring 16, 16" angeordneten elastischen beziehungsweise elastomeren Element 17', 17", welches, wie aus der Figur ersichtlich, den starren äußeren Ring 16', 16" der Stirnsegmente 4', 4" umschließt, d.h. der starre äußere Ring 16', 16'' ist vollständig von dem Material des elastomeren Elements 17', 17'' umgeben (siehe auch Fig. 4b).

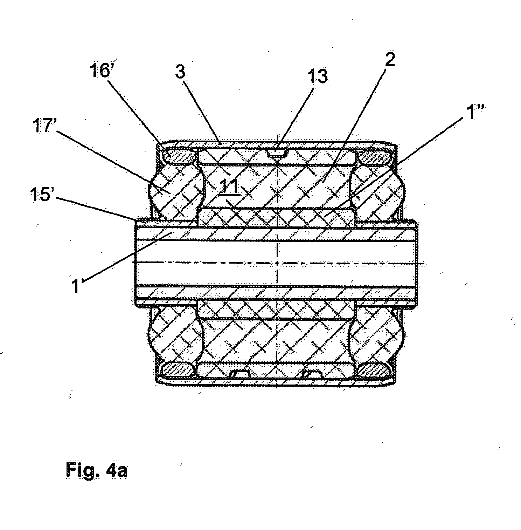

Bei der Montage des Lagers werden die Stirnsegmente 4', 4" jeweils an den axial äußeren Enden auf den Lagerkern 1', 1" aufgepresst. Der Lagerkern 1', 1" besteht bei dem gezeigten Beispiel aus zwei Komponenten, nämlich einer holzylindrischen metallischen Innenhülse 1' und einem die Innenhülse 1' umgebenden äußeren Lagerkern 1" aus Kunststoff, welcher auf die Innenhülse 1' aufgepresst ist und von dieser an den beiden Stirnseiten durchragt wird. Wie aus der Fig. 1 zu erkennen ist, werden die beiden Stirnsegmente 4', 4" jeweils mit ihrem starren Innenring 15', 15" auf die den äußeren Lagerkern 1" durchragenden Abschnitte der Innenhülse 1' aufgepresst. Dies geschieht derart, dass die Kammern 5, 6 des Lagers im Bereich der sie bezüglich der Umfangsrichtung voneinander trennenden Stege 11, 12 gegen den elastomeren Lagerkörper 2 abgedichtet sind (siehe hierzu Fig. 4). Der die Kammern 5, 6 miteinander verbindende und den Übertritt des fluiden Dämpfungsmittels aus einer Kammer 5, 6 in die jeweils andere Kammer 6, 5 ermöglichende Kanal 13 ist aufgrund der Abdichtung des Lagerkörpers 2 gegen die äußeren Stirnsegmente 4', 4" in einem auf den Lagerkörper 2 aufgeschobenen und mit ihm durch Vulkanisation verbundenen starren Kanalträgerelement 14 aus Kunststoff ausgebildet. In dem gezeigten Beispiel ist der Kanal 13 als langer Massedämpfungskanal ausgebildet. Wie aus der Abbildung gemäß Fig. 1 zu erkennen, ist an den Enden des Kanals 13 jeweils ein Dämpfungsmittelein- beziehungsweise -austritt 18, 19 als Übergang zu den Kammern 5, 6 angeordnet.

Die Fig. 2 zeigt nochmals das Lager gemäß der Fig. 1 im zusammengefügten Zustand in einer Schnittdarstellung mit einem längs in axialer Richtung a durch die Kammern 5, 6 des Lagers geführten Schnitt. In dieser Schnittdarstellung sind alle Komponenten des Lagers nochmals gut zu erkennen. Es sind dies das mittlere Hauptsegment 4 des inneren Lagerteils 4, 4', 4" mit dem Lagerkern 1', 1" aus der metallischen Innenhülse 1' und dem darauf aufgepressten äußeren Lagerkern 1" und mit dem durch Vulkanisation mit dem Lagerkern 1', 1" verbundenen, ihn umgebenden elastomeren Lagerkörper 2, ferner die an beiden axialen Stirnseiten auf den Lagerkern 1', 1" aufgepressten äußeren Stirnsegmente 4', 4" mit jeweils einem starren Innenring 15', 15'', einem starren Außenring 16', 16" und einem dazwischen angeordneten elastomeren Element 17', 17" zur Ausbildung der Blähwände 7', 7", 8', 8" für die Kammern 5, 6, sowie schließlich die den solchermaßen ausgebildeten inneren Lagerteil 4, 4', 4" aufnehmende Außenhülse 3 des Buchsenlagers. Zu erkennen sind ferner das zwischen dem Lagerkörper 2 und der Außenhülse 3 angeordnete Kanalträgerelement 14 mit dem darin ausgebildeten Kanal 13 und die in den Kammern 5, 6 angeordneten Radialanschläge 9, 10.

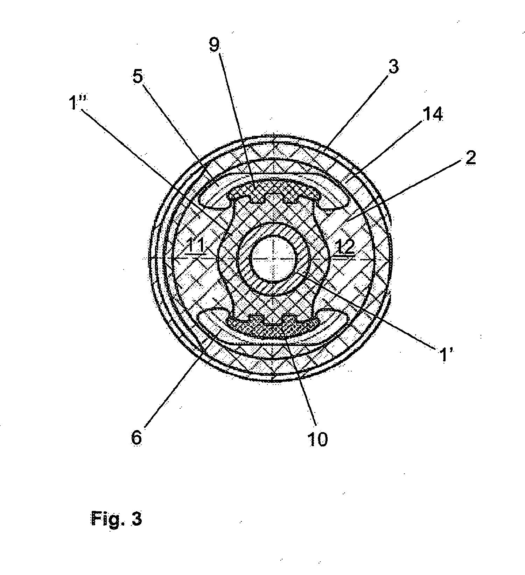

Die Fig. 3 zeigt das Lager nochmals in einer Schnittdarstellung, bei welcher der Schnitt radial durch das Lager geführt ist. Hier sind neben den zuvor genannten Elementen des Lagers insbesondere die die Kammern 5, 6 in der Umfangsrichtung u voneinander trennenden Stege 11, 12 zu erkennen.

Die Fig. 4a zeigt nochmals ein erfindungsgemäßes Lager in einer Ausbildungsform entsprechend den Fig. 1 bis Fig. 3. In dieser Darstellung ist das Buchsenlager in einem Axialschnitt gezeigt, wobei der Schnitt, abweichend von Fig. 2 durch die Stege 11, 12 geführt ist. Die Fig. 4b zeigt in einem vergrößerten Ausschnitt eine Einzelheit des erfindungsgemäßen Lagers gemäß der Fig. 4a. Der Ausschnitt betrifft den stirnseitigen Teil des Lagers. Die Figur verdeutlicht die besondere Art beziehungsweise Anordnung der axial äußeren Stirnsegmente 4', 4" durch die Darstellung einer Hälfte eines solchen, wie bereits betont, im Längsschnitt gezeigten Stirnsegments 4'. Das Stirnsegment 4' besteht aus dem auf den Lagerkern 1', 1" beziehungsweise dessen Innenhülse 1' aufgepressten starren Innenring 15', einem den Innenring 15' umgebenden starren Außenring 16' und dem dazwischen angeordneten elastomeren Element 17'. Das Stirnsegment 4' wird im radial inneren Bereich durch die zwischen seinem Innenring 15' und dem Lagerkern 1', 1" bestehende Presspassung und im radial äußeren Bereich durch die an ihren axialen Enden leicht umgebördelte beziehungsweise verengte Außenhülse 3 des Lagers bezüglich der axialen Richtung a in seiner Lage fixiert. Dabei ist das Stirnsegment 4' derart auf den Lagerkern 1', 1" aufgepresst und an diesem fixiert, dass sein elastomeres Element 17' mit den elastomeren Stegen 11, 12 des Lagerkörpers in Materialüberdeckung ist. Hierdurch sind die Kammern 5, 6 im Bereich der Stege 11, 12 gegen den Lagerkörper 2 abgedichtet, so dass ein Übertritt von Dämpfungsmittel aus einer Kammer 5, 6 in die andere entlang der Stege 11, 12 sicher verhindert ist. Die strömungsleitende Verbindung der Kammern 5, 6 für das Dämpfungsmittel ist daher durch den außerhalb des Lagerkörpers 2 in dem gesonderten, starren Kanalträgerelement 14 ausgebildeten Kanal 13 gegeben. Die elastomeren Elemente 17', 17" der Stirnsegmente 4', 4' bestehen vorzugsweise aus einem anderen Material als der Lagerkörper 2 und dessen Stege 11, 12 an dem mittleren Hauptsegment 4 des Lagers. Hierbei ist es möglich, ohne Einbußen im Dämpfungsverhalten und ohne das Entstehen von Dauerlaufproblemen die elastomeren Elemente 17', 17" der äußeren Stirnsegmente 4', 4" aus einem thermisch robusteren Elastomer auszubilden als den Hauptteil des Lagerkörpers 2.

Unter Beibehaltung des erfindungsgemäßen Prinzips kann der Lagerkörper 2 auch andere Geometrien als bei dem in den zuvor erläuterten Figuren gezeigten Ausführungsbeispiel aufweisen. So können beispielsweise die Stege 11, 12 stirnseitig in Bezug auf die Umfangsrichtung u des Lagers durch je eine sich in axialer Richtung a den Lagerköper 2 hinein erstreckende Niere unterbrochen sein. Hierdurch entsteht eine auch als "X-Leg" bezeichnete Ausbildungsform, bei der im Grunde eine Viersteglagerung gegeben ist.

### Bezugszeichenliste

- 1', 1": Lagerkern
1' Innenhülse
1" äußerer Lagerkern
- 2: Lagerkörper
- 3: Außenhülse
- 4: Hauptsegment des inneren Lagerteils
- 4', 4": Stirnsegment
- 5, 6: Kammer
- 7', 7": Blähwand
- 8', 8": Blähwand
- 9, 10: Radialanschlag
- 11, 12: Steg
- 13: Kanal
- 14: Kanalträgerelement
- 15', 15": Innenring
- 16', 16": Außenring
- 17', 17": elastomeres Element
- 18, 19: Dämpfungsmittelein- und -austritt

- a: axiale Richtung
- u: Umfangsrichtung
- A: Längsachse

## Patentansprüche

1. Hydraulisch dämpfendes Buchsenlager bestehend aus einer Außenhülse (3) und einem von der Außenhülse (3) aufgenommenen inneren Lagerteil (4, 4', 4'') mit einem starren, hülsen- oder strangförmigen metallischen Lagerkern (1', 1"'), einem den Lagerkern (1', 1") umgebenden und mit ihm durch Vulkanisation verbundenen elastomeren Lagerkörper (2) sowie mit mindestens zwei, jeweils mindestens eine elastomere Blähwand (7', 7", 8', 8") aufweisenden und einen Radialanschlag (9, 10) aufnehmenden Kammern (5, 6) für ein fluides Dämpfungsmittel, welche in der Umfangsrichtung (u) des Lagers durch Stege (11, 12) des Lagerkörpers (2) voneinander getrennt und durch wenigstens einen als Massedämpfungskanal oder Drosselkanal ausgebildeten Kanal (13) für das Dämpfungsmittel miteinander verbunden sind, wobei der innere Lagerteil (4, 4', 4'') bezüglich der Längsachse (A) des Lagers segmentiert ist und die Blähwände (7', 7", 8', 8") der Kammern (5, 6) liegend, das heißt quer zur Längsachse (A) des Lagers sowie als Teil zweier, jeweils an einem axialen Ende eines Hauptsegments (4) des inneren Lagerteils (4, 4', 4") angeordneter, von dem Lagerkern (1', 1'') und der Außenhülse (3) an dem Hauptsegment (4) gehaltener Stirnsegmente (4', 4'') ausgebildet sind, welche aus einem Innenring (15', 15"), einem Außenring (16', 16") und einem zwischen dem Innenring (15', 15") und dem Außenring (16', 16'') angeordneten elastomeren Element (17', 17") bestehen, **dadurch gekennzeichnet, dass** die Stirnsegmente (4', 4'') mit ihrem Innenring (15', 15") derart in einer Presspassung auf die axialen Enden des Lagerkerns (1', 1'') aufgepresst sind, dass zwischen den elastomeren Elementen (17', 17'') der Stirnsegmente (4', 4") und den Stegen (11, 12) des Lagerkörpers (2) eine Materialüberdeckung gegeben ist, durch welche die Kammern (5, 6) im Bereich der Stege (11, 12) gegen den Lagerkörper (2) und damit gegeneinander abdichtet sind, so dass der die Kammern (5, 6) verbindende Kanal (13) außerhalb des abgedichteten Lagerkörpers (2) in einem zwischen dem Lagerkörper (2) und der Außenhülse (3) angeordneten und mit dem Lagerkörper (2) durch Vulkanisation verbundenen starren Kanalträgerelement (14) ausgebildet ist.

2. Hydraulisch dämpfendes Buchsenlager nach Anspruch 1, **dadurch gekennzeichnet, dass** das elastomere Element (17', 17") der Stirnsegmente (4', 4'') aus einem gegenüber dem Elastomer des mittleren Hauptsegments (4) temperaturbeständigeren Elastomer besteht.

3. Hydraulisch dämpfendes Buchsenlager nach Anspruch 2, **dadurch gekennzeichnet, dass** das elastomere Element (17', 17") der Stirnsegmente (4', 4") aus einer Silikon-Gummimischung besteht.

4. Hydraulisch dämpfendes Buchsenlager nach Anspruch 2, **dadurch gekennzeichnet, dass** das elastomere Element (17', 17'') der Stirnsegmente (4', 4'') aus einer Ethylen-Propylen-Dien-Monomer-Gummimischung besteht.

5. Hydraulisch dämpfendes Buchsenlager nach einem der Ansprüche 1 bis 4, **dadurch gekennzeichnet, dass** das Kanalträgerelement (14) aus einem Kunststoff besteht.

6. Hydraulisch dämpfendes Buchsenlager nach einem der Ansprüche 1 bis 5, **dadurch gekennzeichnet, dass** sich der Kanal (13) über die gesamte axiale Länge des Kanalträgerelements (14) erstreckt und der Kanal (13) jeweils an einer Stirnseite des Kanalträgerelements (14) im Bereich des Übergangs zwischen dem Hauptsegment (4) und einem Stirnsegment (4', 4") des inneren Lagerteils in eine der Kammern einmündet.

7. Hydraulisch dämpfendes Buchsenlager nach einem der Ansprüche 1 bis 6, **dadurch gekennzeichnet, dass** der Lagerkern (1', 1") aus einer hohlzylindrischen Innenhülse (1') aus Metall und einem auf diese aufgepressten äußeren Lagerkern (1") aus Kunststoff besteht, wobei die Innenhülse (1') axial beidseitig aus dem äußeren Lagerkern (1") herausragt und die Stirnsegmente (4, 4') auf diese den äußeren Lagerkern (1") überragenden Enden der metallischen Innenhülse (1') aufgepresst sind.

8. Hydraulisch dämpfendes Buchsenlager nach Anspruch 7, **dadurch gekennzeichnet, dass** die Radialanschläge (9, 10) aus dem Elastomer des Lagerkörpers (2) gebildet sind und sich innerhalb der Kammern (5, 6) über die gesamte axiale Länge des äußeren Lagerkerns (1") erstrecken.

## Claims

1. Hydraulically damping sleeve bearing comprising an external sleeve (3) and an inner bearing part (4, 4', 4") received by the external sleeve (3), having a rigid sleeve-shaped or tubular metallic bearing core (1', 1''), an elastomeric bearing body (2) which surrounds the bearing core (1', 1") and being connected to said bearing core by means of vulcanisation and at least two chambers (5, 6) for a fluid damping agent, each comprising at least one elastomeric gas wall (7', 7'', 8', 8") and receiving a radial stop (9, 10), which chambers are separated from one another in the peripheral direction (u) of the bearing by means of crosspieces (11, 12) of the bearing body (2) and are connected to one another by means of at least one channel (13) formed as a mass damping channel or restriction channel, whereby the inner bearing part (4, 4', 4") is segmented relative to the longitudinal axis (A) of the bearing and the gas walls (7', 7'', 8', 8") of the chambers (5, 6) are formed in a lying manner, in other words transverse to the longitudinal axis (A) of the bearing and as part of two front segments (4', 4") each arranged on an axial end of a main segment (4) of the inner bearing part (4', 4"), held onto the main segment (4) by the bearing core (1', 1'') and the outer sleeve (3), which chambers consist of an inner ring (15', 15"), an outer ring (16', 16'') and an elastomeric element (17', 17") arranged between the inner ring (15', 15") and the outer ring (16', 16"), **characterised in that** the inner rings (15', 15") of the front segments (4', 4") are pressed on the axial ends of the bearing core (1', 1'') in a tight fit such that there is a material covering between the elastomeric elements (17', 17") of the front segments (4', 4") and the crosspieces (11, 12) of the bearing body (2), through which the chambers (5, 6) are sealed in the region of the crosspieces (11, 12) against the bearing body (2) and therefore against one another, so the channel (13) which connects the chambers (5, 6) outside of the sealed bearing body (2) is formed in a rigid channel carrier element (14) arranged between the bearing body (2) and the external sleeve (3) and connected to the bearing body (2) by means of vulcanisation.

2. Hydraulically damping sleeve bearing according to Claim 1, **characterised in that** the elastomeric element (17', 17'') of the front segments (4', 4") is made of an elastomer which is temperature resistant over the elastomer in the central main segment (4).

3. Hydraulically damping sleeve bearing according to Claim 2, **characterised in that** the elastomeric element (17', 17") of the front segments (4', 4") are made of a silicone and rubber mixture.

4. Hydraulically damping sleeve bearing according to Claim 2, **characterised in that** the elastomeric element (17', 17") of the front segments (4', 4") is made of an ethylene propylene diene monomer rubber mixture.

5. Hydraulically damping sleeve bearing according to any one of Claims 1 to 4, **characterised in that** channel carrier element (14) is made of a plastics material.

6. Hydraulically damping sleeve bearing according to any one of Claims 1 to 5, **characterised in that** the channel (13) extends over the entire axial length of the channel carrier element (14) and in each case the channel (13) discharges into one of the chambers on a front face of the channel carrier element (14) in the area of the transition between the main segment (4) and a front segment (4', 4") in the inner bearing part.

7. Hydraulically damping sleeve bearing according to any one of Claims 1 to 6, **characterised in that** the bearing core (1', 1") consists of a hollow cylindrical inner sleeve (1') made of metal and an external bearing core (1") pressed onto said inner sleeve made of plastics material, whereby the inner sleeve (1') protrudes axially from the external bearing core (1") on both sides and the front segments (4, 4') are pressed onto the ends of the metallic inner sleeve (1') which protrude beyond the external bearing core (1").

8. Hydraulically damping sleeve bearing according to Claim 7, **characterised in that** the radial stops (9, 10) are formed from the elastomer of the bearing body (2) and extend inside the chambers (5, 6) along the entire axial length of the external bearing core (1").

## Revendications

1. Douille palier pour amortissement hydraulique, constitué d'un manchon externe (3) et une partie de palier interne (4, 4', 4") logée par le manchon externe (3), avec un noyau de palier (1', 1") métallique rigide, en forme de manchon ou de tige, un corps de palier (2) élastomère entourant le noyau de palier (1', 1") et relié avec celui-ci par vulcanisation, ainsi qu'au moins deux chambres (5, 6) comprenant chacune au moins une paroi gonflée élastomère (7', 7", 8', 8") et logeant une butée radiale (9, 10) pour un moyen d'amortissement fluide, qui sont séparées entre elles, sur la circonférence (u) du palier par des nervures (11, 12) du corps de palier (2) et sont reliées par au moins un canal (13) conçu comme un canal d'amortissement de masse ou un canal d'étranglement pour le moyen d'amortissement, la partie de palier interne (4, 4', 4") étant segmentée par rapport à l'axe longitudinal (A) du palier et les parois gonflées (7', 7", 8', 8") des chambres (5, 6) étant conçues de manière horizontale, c'est-à-dire transversalement par rapport à l'axe longitudinal (A) du palier ainsi que comme une partie de deux segments frontaux (4', 4") maintenus au niveau d'une extrémité axiale d'un segment principal (4) de la partie de palier interne (4, 4', 4"), sur le segment principal (4) par le noyau de palier (1', 1") et le manchon externe (3), qui sont constitués d'une bague interne (15', 15"), d'une bague externe (16', 16") et un élément élastomère (17', 17") disposé entre la bague interne (15', 15") et la bague externe (16', 16"), **caractérisé en ce que** les segments frontaux (4', 4") sont comprimés avec leur bague interne (15', 15") dans un ajustement par compression sur les extrémités axiales du noyau de palier (1', 1"), de façon à ce que, entre les éléments élastomères (17', 17") des segments frontaux (4', 4") et les nervures (11, 12) du corps de palier (2), une superposition de matériaux existe, grâce à laquelle les chambres (5, 6) sont étanchéifiées au niveau des nervures (11, 12) contre le corps de palier (2) et ainsi étanchéifiées entre elles, de façon à ce que le canal (13) reliant les chambres (5, 6) soit réalisé à l'extérieur du corps de palier (2) étanchéifié dans un élément support de canal (14) rigide disposé entre le corps de palier (2) et le manchon externe (3) et relié avec le corps de palier (2) par vulcanisation.

2. Douille palier pour amortissement hydraulique selon la revendication 1, **caractérisé en ce que** l'élément élastomère (17', 17") des segments frontaux (4', 4") est constitué d'un élastomère plus résistant à la température que l'élastomère du segment principal central (4).

3. Douille palier pour amortissement hydraulique selon la revendication 2, **caractérisé en ce que** l'élément élastomère (17', 17") des segments frontaux (4', 4") est constitué d'un mélange silicone-caoutchouc.

4. Douille palier pour amortissement hydraulique selon la revendication 2, **caractérisé en ce que** l'élément élastomère (17', 17") des segments frontaux (4', 4") est constitué d'un mélange éthylène-propylène-diène-monomère-caoutchouc.

5. Douille palier pour amortissement hydraulique selon l'une des revendications 1 à 4, **caractérisé en ce que** l'élément support de canal (14) est constitué d'une matière plastique.

6. Douille palier pour amortissement hydraulique selon l'une des revendications 1 à 5, **caractérisé en ce que** le canal (13) s'étend sur toute la longueur axiale de l'élément support de canal (14) et le canal (13) débouche au niveau d'un côté frontal de l'élément support de canal (14) au niveau de la transition entre le segment principal (4) et un segment frontal (4', 4") de la partie interne du palier dans une des chambres.

7. Douille palier pour amortissement hydraulique selon l'une des revendications 1 à 6, **caractérisé en ce que** le noyau de palier (1', 1") est constitué d'un manchon interne cylindrique creux (1') en métal et d'un noyau de palier externe (1") comprimé sur celui-ci, en matière plastique, le manchon interne (1') dépassant axialement des deux côtés du noyau de palier externe (1") et les segments frontaux (4, 4'), dépassant du noyau de palier externe (1 "), sont comprimés sur les extrémités du manchon interne métallique (1').

8. Douille palier pour amortissement hydraulique selon la revendication 7, **caractérisé en ce que** les butées radiales (9, 10) sont constitués de l'élastomère du corps de palier (2) et s'étendent à l'intérieur des chambres (5, 6) sur toute la longueur axiale du noyau de palier externe (1 ").
